(19) Europäisches Patentamt
European Patent Office
Office européen des brevets

(11) Veröffentlichungsnummer: **0 296 450 B1**

(12) **EUROPÄISCHE PATENTSCHRIFT**

(45) Veröffentlichungstag der Patentschrift: **27.11.91**

(51) Int. Cl.$^5$: **C08G 18/00**, C08G 18/16, C08G 59/40

(21) Anmeldenummer: **88109419.7**

(22) Anmeldetag: **14.06.88**

# (54) Oxazolidongruppen enthaltende Epoxidharze.

(30) Priorität: **24.06.87 DE 3720759**

(43) Veröffentlichungstag der Anmeldung:
**28.12.88 Patentblatt 88/52**

(45) Bekanntmachung des Hinweises auf die Patenterteilung:
**27.11.91 Patentblatt 91/48**

(84) Benannte Vertragsstaaten:
**AT DE ES FR GB IT NL SE**

(56) Entgegenhaltungen:
**WO-A-86/06734**
**FR-A- 2 101 498**
**US-A- 3 721 650**

(73) Patentinhaber: **STAMICARBON B.V.**
**P.O. Box 605**
**NL-6160 AP Geleen(NL)**

(72) Erfinder: **Hess, Bernhard, Dr.**
**Kaldenhausener Strasse 84**
**W-4130 Moers(DE)**
Erfinder: **Müller, Hanns Peter, Dr.**
**Weizenfeld 36**
**W-5060 Bergisch-Gladbach(DE)**
Erfinder: **Heine, Heinrich, Dipl.-Ing.**
**Müritzstrasse 38**
**W-5090 Leverkusen(DE)**
Erfinder: **Brassat, Bert, Dr.**
**Bodelschwinghstrasse 30**
**W-4150 Krefeld(DE)**
Erfinder: **Klöker, Werner, Prof. Dr.**
**Deswatinesstrasse 26**
**W-4150 Krefeld(DE)**
Erfinder: **Uerdingen, Walter, Dr.**
**Humperdinckstrasse 41**
**W-5090 Leverkusen(DE)**

**EP 0 296 450 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung von oligomeren, Oxazolidongruppen enthaltenden Polyepoxiden aus Bisepoxiden und Diisocyanaten.

Die Härtung von Epoxidharzen mit Polyisocyanaten ist bekannt (z.B. US-PS 3 020 262, DE-A-17 20 663). Bei dieser Härtung kann eine Oxazolidonbildung und die Trimerisation des Diisocyanats eintreten. Beim Einsatz von bifunktionellen Ausgangsverbindungen führt die Oxazolidonbildung zu einer linearen, unvernetzten Matrix. Eine ablaufende Trimerisation der Polyisocyanate führt zu vernetzten, unlöslichen Produkten.

Will man noch lösliche, unvernetzte Oxazolidongruppen enthaltende Epoxidharze aus Diisocyanaten und Bisepoxiden herstellen, so sollte eine Trimerisation der Isocyanate nur in geringem Ausmaß stattfinden.

Aus der DE-OS 2 130 157 ist z.B. bekannt, daß bei der Herstellung von Oxazolidongruppen enthaltenden Epoxidharzen beim Umsatz von Diisocyanat mit Bisepoxid Phosphoniumsalze als Katalysatoren die Diisocyanate mit Monoalkoholen blockiert werden können und damit deren Trimerisation verhindert werden kann. Das Verfahren hat den Nachteil, daß der zur Verkappung des Diisocyanats eingesetzte Monoalkohol wieder abdestilliert werden muß.

In der EP-OS 113 575 wird die Herstellung von Oxazolidongruppen enthaltenden Pulverlacken mit Epoxidgruppen beschrieben, die durch Umsatz von Diisocyanaten mit Bisepoxiden unter Einsatz von quaternären Ammoniumhalogeniden als Katalysatoren hergestellt werden. Die Reaktion verläuft nicht immer quantitativ im gewünschten Sinn. Außerdem wird eine hohe Katalysatormenge benötigt, die im Harz verbleibt und die Lagerstabilität beeinträchtigen kann.

Es wurde gefunden, daß beim Einsatz von Bisepoxiden, die noch OH-Gruppen aufweisen entsprechend einer OH-Zahl von ≧2 und Diisocyanaten mit zwei unterschiedlich reaktiven NCO-Gruppen beim Einsatz von nachstehend definierten Mengen an Phosphoniumsalzen lösliche, unvernetzte Oxazolidongruppen enthaltende Epoxidharze herstellbar sind.

Gegenstand der Erfindung ist somit ein Verfahren zur Herstellung von oligomeren, Oxazolidongruppen enthaltenden Polyepoxiden aus Bisepoxiden und Diisocyanaten, dadurch gekennzeichnet, daß bei 140-180 °C in Gegenwart eines dürch die nachstehende Formel I definierten Phosphoniumsalzes als Katalysator entweder (A) Bisepoxidether mit OH-Gruppen entsprechend einer OH-Zahl von mindestens 2, mit aromatischen Diisocyanaten mit zwei unterschiedlich reaktiven NCO-Gruppen in einer Menge von mindestens 1/4 des Gesamtgewichts des Diisocyanats (falls sie im Gemisch mit Diisocyanaten mit zwei gleich reaktiven NCO-Gruppen eingesetzt werden) oder (B) Bisepoxyxidester mit OH-Gruppen entsprechend einer OH-Zahl von mindestens 2, mit aromatischen, aliphatischen oder cycloaliphatischen Diisocyanaten, bevorzugt solchen mit unterschiedlich reaktiven NCO-Gruppen in einer Menge von mindestens 1/4 des Gesamtgewichts des Diisocyanats, in einem Mengenverhältnis von NCO-Gruppe zu Epoxidgruppen von 1:1,4 bis 1:2,5 miteinander umgesetzt werden.

Die für das erfindungsgemäße Verfahren geeigneten Bisepoxidether sind Diglycidylether von zweiwertigen, aliphatischen Alkoholen mit 2 bis 4 C-Atomen oder zweiwertigen Phenolen wie Bisphenol-A oder -F oder -Sulfonyl-oder -Thionylbisphenol oder deren Kern-substituierte Derivate, oder Bisglycidylester von Dicarbonsäuren wie Bernsteinsäure, Adipinsäure, Azelainsäure, Sebacinsäure oder dimerisierte Fettsäure, Ortho-, Iso- oder Terephthalsäure, Tetra- oder Hexahydrophthalsäure oder deren Ring-alkylierte Derivate.

Bevorzugte Bisepoxide sind Bisphenol-A- oder -F-bisglycidylether und Hexahydrophthalsäurebisglycidylester.

Die genannten Bisepoxide haben eine OH-Zahl größer oder gleich 2 (≥2). Die OH-Gruppen können bei der Herstellung der Bisepoxide aus Diolen oder Dicarbonsäuren mit Epichlorhydrin entstanden sein oder durch gezielten Umsatz von OH-Gruppen-freien Bisepoxiden mit weiteren Mono- oder Polyolen, Mono- oder Polycarbonsäuren, oder durch partielle Verseifung der Epoxidgruppen eines Polyepoxids.

Die OH-Zahl der genannten Bisepoxide kann z.B. nach Chimica, Bd. 33, 1979, Nr. 3, Seite 84 neben Epoxidgruppen titriert oder mit Hilfe einer Eichkurve aus dem IR-Spektrum bestimmt werden.

Erfindungsgemäß können aromatische und aliphatische Diisocyanate, vorzugsweise aromatische Diisocyanate, eingesetzt werden.

Für das erfindungsgemäße Verfahren können zur Kombination mit Diepoxidethern aromatischen Dissocyanate mit zwei unterschiedlich reaktiven NCO-Gruppen eingesetzt werden, z.B. o,p-Toluylendiisocyanat, Diphenylmethan-2,4'-diisocyanat, Naphthylendiisocyanat-1,3 allein oder im Gemisch untereinander oder im Gemisch mit anderen Diisocyanaten, die zwei gleichreaktive NCO-Gruppen aufweisen, z.B. im Gemisch mit Diphenylamethan-4,4'-diisocyanat, o,o-Toluylendiisocyanat, Naphthylendiisocyanat-1,5. In diesem Falle sollen die Diisocyanate mit unterschiedlich reaktiven NCO-Gruppen mindestens 1/4 des Gesamtgewichts der Diisocyanate ausmachen.

Zur Kombination mit Bisepoxidestern können außer den aromatischen Diisocyanaten auch aliphatische Diisocyanate wie Hexamethylen-1,6-diisocyanat oder cycloaliphatische Diisocyanate, wie Isophonrondiisocyanat, Methylenbiscyclohexyldiisocyanat-4,4′ oder -2,4′ eingesetzt werden. Diisocyanate, die zwei unterschiedlich reaktive NCO-Gruppen enthalten sind bevorzugt. Sie werden in einer Menge eingesetzt, die mindestens 1/4 des Gesamtgewichts der eingesetzten Diisocyanate beträgt.

Isocyanate, die zwei unterschiedlich reaktive NCO-Gruppen enthalten, werden bevorzugt verwendet.

Die für das erfindungsgemäße Verfahren verwendeten Katalysatoren sind Phosphoniumsalze der Formel (I)

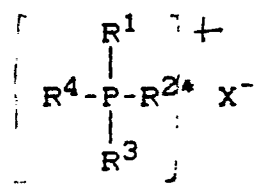

(I),

in welcher
$R^1$, $R^2$, $R^3$ und $R^4$ unabhängig voneinander für $C_5$-$C_{10}$-Cycloalkyl, $C_1$-$C_8$-Alkyl und $C_6$-$C_{10}$-Aryl stehen und X für $C_2$-$C_6$-Carboxylat und Halogen wie Fl, Cl, Br und J steht,
die z.B. in der DE-OS 21 230 157 benannt werden. Bevorzugt sind die Cyclohexyl-, $C_1$-$C_8$-Alkyl- oder Phenyl-substituierten Phosphoniumsalze in Form der Chloride, Bromide, Iodide oder der Acetate.

Die Katalysatoren werden in Mengen von 0,005 bis 1,0 Gew.-%, bevorzugt 0,01 bis 0,5 Gew.-%, bezogen auf Bisepoxid, verwendet.

Das Verfahren wird bei einer Temperatur von 140 bis 180 °C, bevorzugt von 150 bis 170 °C durchgeführt.

Das Mengenverhältnis, in dem die Bisepoxide mit den Diisocyanaten umgesetzt werden, liegt bei 1,4 bis 2,5 Epoxidgruppen pro einer NCO-Gruppe, vorzugsweise 1,6 bis 2,2 Epoxidgruppen pro einer NCO-Gruppe. In jedem Fall bleiben reaktive Epoxidgruppen im Endprodukt übrig, die für Folgereaktionen oder zur Vernetzung zur Verfügung stehen. Je geringer der Überschuß an Epoxidgruppen gegenüber den NCO-Gruppen ist, umso höher wird das Molekulargewicht der modifizierten Epoxidharze und umso höher deren Schmelzviskosität.

Die erfindungsgemäßen Oxazolidongruppen enthaltenden Polyepoxide können mit anderen flüssigen oder festen Epoxidharzen oder Reaktivverdünnern abgemischt und mit Hilfe der üblichen Härter wie Polyaminen, Säureanhydriden oder Polyisocyanaten, bei üblichen Temperaturen von 10 bis 150 °C gehärtet werden.

Die Härtungsprodukte zeigen gegenüber Oxazolidongruppen-freien Vergleichsprodukten eine erhöhte Reißfestigkeit, Reißdehnung, Schlagzähigkeit, Kugeldruckhärte und Wärmeformbeständigkeit.

## Beispiele

Die in der Tabelle I jeweils aufgeführte Menge an Bisepoxidharzen und Katalysatoren werden in einen Kolben mit Rührer und Gaseinleitungsrohr eingewogen und unter Stickstoff auf 160 °C aufgeheizt. Zu der Schmelze wird das Diisocyanat so schnell zugetropft, daß eine Temperatur von etwa 170 °C eingehalten wird, was durch Abschalten der Heizung oder durch Kühlung gesteuert werden kann. Nach der Zugabe des gesamten Diisocyanats wird bei 160 °C nachgerührt bis der berechnete Epoxidwert erreicht und kein reaktives NCO mehr nachweisbar ist. Das erhaltene Produkt wird als Schmelze heiß abgefüllt. Es erstarrt beim Abkühlen.

Die Beispiele und Vergleichsbeispiele zeigen, daß nur bei Einsatz der erfindungsgemäßen, OH-Gruppen-haltigen Epoxidharze in Kombination mit den erfindungsgemäßen, ungleich reaktiv NCO-Gruppen enthaltenden Diisocyanaten unter Phosphoniumsalzkatalyse bei ca. 160 °C die gewünschten Oxazolidon-Epoxidharze erhalten werden können.

## Kennzeichnung der benutzten Abkürzungen:

(Die OH-Zahl wurde gemäß Lit. Zitat Seite 4 titriemetrisch ermittelt).

X18: Bisphenol-A-bisglycidylether, rein. (OH-Zahl: 0, Epoxidäquivalentgewicht: 172)
X20: Bisphenol-A-bisglycidylether, technisch. (OH-Zahl:15, Epoxidäquivalentgewicht: 186)
X100: Hexahydrophthalsäurebisglycidylester, technisch. (OH-Zahl:17, Epoxidäquivalentgewicht: 196)
T65: Gemisch aus 65 Gew.-% o,p-Toluylendiisocyanat und 35 Gew.-% o,o-Toluylendiisocyanat
T100: o,p-Toluylendiisocyanat
MDI: Diphenylmethandiisocyanat-4,4'
MDI-M: Gemisch aus 55 Gew.-% Diphenylmethandiisocyanat-4,4' und 45 Gew.-% Diphenylmethandiisocyanat-2,4'
IPDI: Isophorondiisocyanat, rein.
Katalysator A: Tetrabutylphosphoniumbromid
Katalysator B: Benzyltriphenylphosphoniumchlorid

Die in der Tabelle I angegebenen Mengen sind Gewichtsteile.

Tabelle I

| Beispiel: | 1 | | | | 2 | 3 | 4 | 5 | 6 | 7 |
|---|---|---|---|---|---|---|---|---|---|---|
| Vergleichsbeispiel: | | 1a | 1b | 1c | | | | | | |
| Epoxidharz: | | | | | | | | | | |
| X18 (Vergl.) | - | 220,7 | - | - | - | - | - | - | - | - |
| X20 | 224,5 | - | 226,4 | 231,7 | 242,7 | 244,4 | - | - | - | 299,2 |
| X100 | - | - | - | - | - | - | 234,4 | 228 | 234,4 | - |
| Katalysator A | 0,22 | 0,22 | 0,22 | 0,23 | 0,24 | 0,24 | 0,23 | 0,23 | - | 0,3 |
| Katalysator B | - | - | - | - | - | - | - | - | 0,23 | - |
| Diisocyanat: | | | | | | | | | | |
| T65 | - | - | - | - | 57,3 | - | - | - | - | - |
| T100 | - | - | - | - | - | 55,6 | - | - | - | - |
| MDI (Vergl.) | - | - | 73,6 | - | - | - | - | - | - | - |
| MDI-M | 75,7 | 79,3 | - | - | - | - | - | 72 | - | 125 |
| IPDI | - | - | - | 68,3 | - | - | 65,6 | - | 65,6 | - |
| Reaktionszeit (Std.) | 3 | geliert | geliert | geliert | 6 | 6 | 16 | 8 | 24 | 10 |
| Äquival.Epoxid:NCO | 2:1 | 2:1 | 2:1 | 2:1 | 2:1 | 2:1 | 2:1 | 2:1 | 2:1 | 1,6:1 |
| % NCO im Endprodukt: | 0 | | | | 0 | 0 | 0 | 0 | 0 | 0 |
| Epoxidäquiv.-gew.: | 503 | | | | 460 | 460 | 503 | 506 | 486 | 711 |
| Schmelzbereich (°C): | 88-94 | | | | 82-85 | 86-89 | 68-75 | 65-68 | 75-82 | 112-116 |

Beispiele 8 bis 10:

Heißhärtungen eines Oxazolidongruppen enthaltenden Epoxidharzes in Kombination mit einem flüssigen Bisphenol-A-bisglycidylether:

Zusammensetzung der Mischungen:

100 g Bisphenol-A-bisglycidylether, technisch
+ x g Oxazolidonepoxidharz gemäß Bsp. 1 (s. Tab. II)
+70 g Hexahydrophthalsäureanhydrid

+ 1,7g Dimethylbenzylamin

Jeweils 5, 10 und 15 g Oxazolidonepoxidharz gemäß Beispiel 1 werden in 100 g Bisphenol-A-bisglycidylether bei 100 bis 110° C gelöst. Zu der Lösung werden 70 g Hexahydrophthalsäureanhydrid zugegeben. Die Schmelze wird auf Raumtemperatur abgekühlt, 1,7 g Dimethylbenzylamin eingerührt, evakuiert und danach zwischen zwei Glasplatten mit einem Abstand von 4 mm gegossen. Die Platten werden 4 Std. bei 80° C angehärtet, danach 16 Std. bei 120° C ausgehärtet und danach entformt. Das gehärtete Material wird in Normstäbe geschnitten und mechanisch vermessen. Es zeigt die in Tabelle II aufgeführten mechanischen Werte, die gegenüber der vergleichsprobe ohne Oxazolidonepoxidharzanteil deutlich verbessert sind.

Tabelle II

| Beispiel : | 8 | 9 | 10 | Vergl. |
|---|---|---|---|---|
| Harz gemäß Beispiel 1: | 5g | 10g | 15g | ohne Harz |
| Viskosität b.25° C (mPas) | 2046 | 3550 | 4840 | 1186 |
| Martensgrad (° C) | 102 | 105 | 107 | 100 |
| Reißfestigkeit (MPa) | 82 | 83 | 86 | 82 |
| Reißdehnung (%) | 3,8 | 5,8 | 5,9 | 3,7 |
| Schlagzähigkeit ($KJ/m^2$) | 20 | 23 | 23 | 13 |

<u>Beispiel 11:</u>

Heißhärtung des Oxazolidongruppen enthaltenden Epoxidharzes gemäß Beispiel 1 mit Phthalsäureanhydrid:
100 g Oxazolidonepoxidharz gemäß Beispiel 1 werden mit 35 g Phthalsäureanhydrid wie in Beispiel 8 - 10 beschrieben, aufgeschmolzen, entgast, zwischen Glasplatten mit 4 mm Abstandshalter gegossen und 15 Std. bei 150° C gehärtet. Die mechanischen Werte der gehärteten Platte sind in Tabelle III im Vergleich zu einer Vergleichsplatte aus 100 g Bisphenol-A-bisglycidylether und 70 g Phthalsäureanhydrid gegenübergestellt. Sie zeigen deutlich die Vorteile der erfindungsgemäßen Mischung, insbesondere die erhöhte Wärmeformbeständigkeit und Kugeldruckhärte.

Tabelle III

| Beispiel | 11 | Vergleichsbeispiel |
|---|---|---|
| Martensgrad (° C) | 143 | 133 |
| Kugeldruckhärte (MPa) | 195 | 164 |
| Schlagzähigkeit ($kJ/m^2$) | 13 | 10 |
| Biegefestigkeit (MPa) | 128 | 130 |
| Zugfestigkeit (MPa) | 81 | 77 |

**Patentansprüche**

**1.** Verfahren zur Herstellung von oligomeren, Oxazolidongruppen enthaltenden Polyepoxiden aus Bisepoxiden und Diisocyanaten, dadurch gekennzeichnet, dass bei 140-180° C in Gegenwart eines Phosphoniumsalzes der Formel I

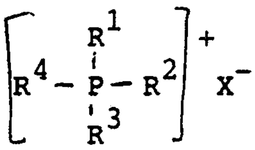

(I),

in welcher $R^1$, $R^2$, $R^3$ und $R^4$ unabhängig voneinander für $C_5$-$C_{10}$-Cycloalkyl, $C_1$-$C_8$-Alkyl und $C_6$-$C_{10}$-Aryl stehen und X für $C_2$-$C_6$-Carboxylat und Halogen wie Fl, Cl, Br und J steht, als Katalysator in Mengen von 0,005 bis 1,0 Gew.-% bezogen auf Bisepoxid, entweder (A) Bisepoxidether mit OH-Gruppen entsprechend einer OH-Zahl von mindestens 2, mit aromatischen Diisocyanaten mit zwei unterschiedlich reaktiven NCO-Gruppen entweder allein oder im Gemisch untereinander oder im Gemisch mit Diisocyanaten mit zwei gleich reaktiven NCO-Gruppen, wobei im letzteren Fall die Diisocyanate mit zwei unterschiedlich reaktiven NOC-Gruppen mindestens 1/4 des Gesamtgewichts der Diisocyanate ausmachen, oder (B) Bisepoxidester mit OH-Gruppen entsprechend einer OH-Zahl von mindestens 2, mit aromatischen, aliphatischen oder cycloaliphatischen Diisocyanaten in einem Mengenverhältnis von NCO-Gruppe zu Epoxidgruppen von 1:1,4 bis 1:2,5 miteinander umgesetzt werden.

2. Verfahren nach Anspruch 1, dadurch gekennzeichnet, dass man in der Variante (B) Diisocyanate mit zwei unterschiedlich reaktiven NCO-Gruppen einsetzt, wobei diese Diisocyanate mindestens 1/4 des Gesamtgewichts der Diisocyanate ausmachen.

3. Verfahren nach Anspruch 1 und 2, dadurch gekennzeichnet, dass Bisphenol-A-bisepoxidether und/oder Hexahydrophthalsäurebisepoxidester mit OH-Zahlen > 2 eingesetzt werden.

4. Verfahren nach Anspruch 1 und 2, dadurch gekennzeichnet, dass als Diisocyanate o,p-Toluylendiisocyanate und/oder Diphenylmethan-2,4'-diisocyanate und/oder Isophorondiisocyanat allein oder in Gemischen eingesetzt werden, in denen die genannten Diisocyanate mindestens 1/4 des Gesamtgewichts der Diisocyanate ausmachen.

5. Verfahren nach Anspruch 1, und 2 dadurch gekennzeichnet, dass das Phosphoniumsalz ein mit Cyclohexyl- und/oder Alkyl- mit 1 bis 8 C-Atomen, und/oder Phenylresten substituiertes Phosphoniumsalz ist.

6. Verfahren nach Anspruch 1 und 2, dadurch gekennzeichent, dass das hosphoniumsalz in Form eines Chlorids, Bromids, Iodids oder Acetats vorliegt.

7. Verfahren nach Anspruch 5, dadurch gekennzeichent, dass der verwendete Katalysator als Kation Tetrabutylphosphonium und/oder Triphenylbenzylphosphonium enthält.

8. Verfahren nach Anspruch 1 und 2, dadurch gekennzeichent, dass die Umsetzung bei einer Temperatur von 150 bis 170 °C durchgeführt wird.

9. Epoxidharze hergestellt nach dem Verfahren der Ansprüche 1 und 2.

## Claims

1. A process for the preparation of oligomeric polyepoxides containing oxazolidone groups from bisepoxides and diisocyanates, characterized in that at 140-180 °C, in the presence of a phosphonium salt of formula I:

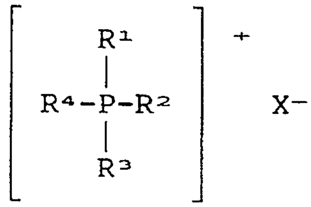

(I)

in which

$R^1$, $R^2$, $R^3$ and $R^4$ independently of one another are $C_5$-$C_{10}$ cycloalkyl, $C_1$-$C_8$ alkyl or $C_6$-$C_{10}$ aryl and X is $C_2$-$C_6$ carboxylate or halogen such as F, Cl, Br or I, as catalyst, in amounts of 0.005 to 1.0% by weight based on bisepoxide, either (A) bisepoxide ethers containing OH groups corresponding to an OH number of at least 2 are reacted with aromatic diisocyanates containing two NCO groups of different reactivities, either by themselves or in a mixture with one another or in a mixture with diisocyanates containing two NCO groups of identical reactivities, in which case the diisocyanates containing two NCO groups of different reactivities make up at least 1/4 of the total weight of the diisocyanates, or (B) bisepoxide esters containing OH groups corresponding to an OH number of at least 2 are reacted with aromatic, aliphatic or cycloaliphatic diisocyanates, in proportions of NCO groups to epoxy groups of 1:1.4 to 1:2.5.

**2.** A process according to Claim 1, characterized in that in variant (B), diisocyanates containing two NCO groups of different reactivities are used, these diisocyanates making up at least 1/4 of the total weight of the diisocyanates.

**3.** A process according to Claims 1 and 2, characterized in that bisphenol A bisepoxy ethers and/or hexahydrophthalic acid bisepoxy esters with OH numbers > 2 are used.

**4.** A process according to Claims 1 and 2, characterized in that the diisocyanates used are o,p-toluylene diisocyanates and/or diphenylmethane 2,4'-diisocyanates and/ or isophorone diisocyanate, by themselves or in mixtures in which said diisocyanates make up at least 1/4 of the total weight of the diisocyanates.

**5.** A process according to Claims 1 and 2, characterized in that the phosphonium salt is a phosphonium salt substituted by cyclohexyl radicals and/or alkyl radicals having 1 to 8 C atoms and/or phenyl radicals.

**6.** A process according to Claims 1 and 2, characterized in that the phosphonium salt is in the form of a chloride, bromide, iodide or acetate.

**7.** A process according to Claim 5, characterized in that the catalyst used contains tetrabutylphosphonium and/or triphenylbenzylphosphonium as the cation.

**8.** A process according to Claims 1 and 2, characterized in that the reaction is carried out at a temperature of 150 to 170 °C.

**9.** Epoxy resins prepared by the process of Claims 1 and 2.

## Revendications

**1.** Procédé pour préparer des polyépoxydes oligomères, comportant des groupes oxazolidone, à partir de bisépoxydes et de diisocyanates, caractérisé en ce que, à 140-180 °C, en présence d'un sel de phosphonium de formule I

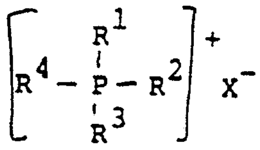 (I),

dans laquelle

$R^1$ $R^2$ $R^3$ et $R^4$, indépendamment les uns des autres, représentent un cycloalkyle en $C_5$-$C_{10}$, un alkyle en $C_1$-$C_8$ et un aryle en $C_6$-$C_{10}$ et X représente un carboxylate en $C_2$-$C_6$ et un halogène comme F, Cl, Br et I, ce sel servant de catalyseur en quantité de 0,005 à 1,0% en poids par rapport aux bisépoxydes, on fait réagir ensemble soit (A) des éthers bisépoxy, comportant des groupes OH correspondant à un nombre de OH d'au moins 2, avec des diisocyanates aromatiques ayant deux groupes NCO a réactivités différentes, seuls ou en mélanges entr'eux ou en mélange avec des diisocyanates ayant deux groupes NCO à réactivités égales, de telle sorte que, dans ce dernier cas, les diisocyanates ayant deux groupes NCO à réactivités différentes représentent au moins 1/4 du poids total des diisocyanates,

soit (B) des esters bisépoxy ayant des groupes OH correspondant à un nombre de OH d'au moins 2, avec des diisocyanates aromatiques, aliphatiques ou cycloaliphatiques, avec un rapport du nombre de groupes NCO au nombre de groupes époxy de 1:1,4 à 1:2,5.

2. Procédé selon la revendication 1, caractérisé en ce que l'on utilise dans la variante (B) des diisocyanates ayant deux groupes NCO à réactivités différentes, de telle sorte que ces diisocyanates représentent au moins 1/4 du poids total des diisocyanates.

3. Procédé selon la revendication 1 ou 2, caractérisé en ce que l'on utilise des éthers bisépoxy de bisphénol A et/ou des esters bisépoxy de l'acide hexahydrophtalique, avec des nombres de OH > 2.

4. Procédé selon l'une des revendications 1 ou 2, caractérisé en ce que l'on utilise comme diisocyanates l'o,ptolylène-diisocyanate et/ou le diphénylméthane-2,4'-diisocyanate et/ou le diisocyanate d'isophorone, seuls ou dans des mélanges dans lesquels lesdits diisocyanates représentent au moins 1/4 du poids total des diisocyanates.

5. Procédé selon l'une des revendications 1 ou 2, caractérisé en ce que le sel de phosphonium est un sel de phosphonium substitué avec des restes cyclohexyle et/ou alkyle avec de 1 à 8 atomes de C et/ou phényle.

6. Procédé selon l'une des revendications 1 ou 2, caractérisé en ce que le sel de phosphonium se présente sous la forme d'un chlorure, bromure, iodure ou acétate.

7. Procédé selon la revendication 5, caractérisé en ce que le catalyseur utilisé comporte comme cation le tétrabutylphosphonium et/ou le triphénylbenzylphosphonium.

8. Procédé selon l'une des revendications 1 ou 2, caractérisé en ce que la réaction est mise en oeuvre à une température de 150 à 170° C.

9. Résines époxy préparées selon le procédé conforme à l'une des revendications 1 ou 2.